# Europäisches Patentamt

## European Patent Office

## Office européen des brevets

(11) Publication number: **0 176 641**
**B1**

# EUROPEAN PATENT SPECIFICATION

(45) Date of publication of patent specification: **15.02.89**

(21) Application number: **84306826.3**

(22) Date of filing: **05.10.84**

(51) Int. Cl.⁴: **F 15 D 1/00, F 17 D 1/16, C 08 F 210/00**

(54) **Hydrocarbon fluid friction reducing composition containing olefin copolymer and process for producing same.**

(43) Date of publication of application:
**09.04.86 Bulletin 86/15**

(45) Publication of the grant of the patent:
**15.02.89 Bulletin 89/07**

(84) Designated Contracting States:
**DE FR GB IT NL**

(56) References cited:
**FR-A-2 258 402**
**GB-A-2 074 175**
**US-A-2 976 271**
**US-A-2 983 720**

(73) Proprietor: **Pony Industries Incorporated**
**204 East 39th Street**
**New York, New York 10016 (US)**

(72) Inventor: **Kostelnik, Robert J.**
**914 Oakbourne Road**
**West Chester, Pa. 19380 (US)**

(74) Representative: **Cropp, John Anthony David et al**
**MATHYS & SQUIRE 10 Fleet Street**
**London, EC4Y 1AY (GB)**

Courier Press, Leamington Spa, England.

**Description**

Background of the invention

Field of the invention

This invention relates to the preparation of alpha-olefin copolymers and more particularly to the preparation of alpha-olefin copolymers having improved hydrocarbon oil pipeline friction-reducing properties.

Prior art

When fluids are pumped through a conduit, such as a pipeline, friction resulting from the movement of the fluid over the inside surface of the conduit causes a pressure drop in the fluid which increases as the downstream distance from the pump increases. The pressure drop results in reduced flow rates. It is known that the flow rate of the fluid through the conduit can be increased by reducing the friction of the fluid in the conduit.

Hydrocarbon fluid frictional loss in conduits can be reduced by injecting into the fluid polymeric substances which are capable of reducing the friction loss of the fluid moving through the conduit. It has been reported that alpha-monoolefin polymers are particularly useful for reducing friction loss in hydrocarbons such as crude oil flowing through pipelines. U.S. Patent No. 3,692,676 discloses the reduction of friction loss in hydrocarbon liquids flowing through pipelines by adding to such liquids small amounts of homopolymers or copolymers of alpha-olefins having from 6 to 20 carbon atoms. U.S. Patents 3,351,079; 3,493,000; 3,559,664 and 3,682,187, disclose the addition of polyethylene or copolymers of ethylene and propylene or other low molecular weight alpha-monoolefins to hydrocarbon fluids to reduce fluid friction loss. GB—A—2074175 discloses the addition of copolymers of butene-1 and at least one other alpha-monoolefin to a hydrocarbon fluid flowing in a pipeline to reduce frictional loss. According to this publication, a particularly suitable method for preparing these copolymers is the Ziegler process employing in particular a titanium halide and an organoaluminium compound.

Even though such additives may effect drag reduction in hydrocarbon liquids flowing through conduits their use is expensive because of their high costs and the large quantities of them required in continuous use applications. Accordingly, improvements which lower the cost of use of these drag reducing agents, such as increasing their efficiency, are continuously sought.

US Patent Nos. 2,976,271 and 2,983,720 disclose the homopolymerization of propylene and butene-1, respectively, by means of a three component catalyst comprising aluminiumtrialkyl, aluminiumdialkyl monohalide and a reducible compound of titanium, such as titanium tetrachloride. US Patent No. 2,971,925 discloses the preparation of polymers of monoolefins having a high degree of linearity by polymerizing monoolefins in the presence of catalyst prepared by reacting aluminiumtriethyl and titanium tetrachloride and reacting the resulting product with a hydrocarbon solution of aluminiumdiethyl chloride. US Patent No. 2,943,063 discloses the polymerisation of olefins in the presence of a catalyst comprising combinations of titanium tetrahalide with trialkylaluminium or dialkylaluminium halide. US Patent No. 3,222,295 discloses the preparation of monoolefin polymerisation catalysts by reacting a titanium tetrahalide with a dialkylaluminium halide and reacting the resulting complex with an aluminiumtrialkyl compound. US Patents 3,257,368, 3,261,821 and 3,281,375 teach the preparation of alpha-monoolefin polymers by a catalyst prepared by reaching a solution of aluminiumtriethyl and titanium tetrachloride with aluminiumdialkyl halides. US Patent 3,723,350 discloses olefin polymerization catalysts made by reducing a mixture of metallic halides, including a titanium tetrachloride with a dialkylaluminium halide and reacting the reduction product with an aluminiumtrialkyl, an alkylaluminium halide and/or a dialkylaluminium halide.

The above references show the use of trialkylaluminium compounds and dialkylaluminium halides alone or in combination as activators for alpha-monoolefin catalyst polymerisations. It has been observed that trialkylaluminium activators used alone increase the rate of Ziegler catalysed polymerisation of alpha-monoolefins, but the drug reducing effectiveness of the resulting polymers is relatively low. On the other hand the drag reducing effectiveness of alpha-monoolefin copolymers prepared with a Zielger catalyst activated solely by a dialkylaluminium halide is better than that of those copolymers obtained using trialkylaluminium as the sole activator but the rate of polymerisation of the former products is relatively low.

The present invention is based on the discovery that the friction reducing properties of alpha-monoolefin copolymers prepared in an inert solvent by the Ziegler polymerisation process are improved significantly by conducting the polymerisation in the presence of a mixture of at least one dialkylaluminium halide and at least one trialkylaluminium compound. In fact, the drag-reducing effectiveness of alpha-monolefin copolymers prepared in accordance with the invention is better than the effectiveness of alpha-monoolefin copolymers prepared using either a trialkylaluminium compound or a dialkylaluminium halide compound as the sole activator. Furthermore, the rate of polymerisation of the alpha-monoolefin monomers is higher than when dialkylaluminium halide catalysts are used alone.

In accordance with the present invention there is provided a hydrocarbon fluid friction reducing composition comprising (a) an organic solvent and (b) a high molecular weight copolymer of two or more alpha-monoolefins having 2 to 30 carbon atoms prepared by copolymerising the corresponding alpha-monoolefins in the presence of a catalyst comprising a compound of a metal of Group IV—B, V—B, or VIII of the Periodic Chart and an organo metal catalyst activator characterised in that said activator comprises 1 to 20 moles of at least one trialkylaluminium compound, such alkyl group of which has 1 to 10 carbon atoms and 99 to 80 moles of at least one dialkylaluminium halide compound, each alkyl group of which has 1 to 10 carbon atoms, per 100 moles of catalyst activator, and the mole ratio of activator to catalyst in the reaction mixture is in the range of 0.001:1 to 50:1.

The invention also provides a process for preparing a hydrocarbon fluid friction reducing composition comprising mixing two or more alpha-monoolefins having 2 to 30 carbon atoms in a diluent or an organic solvent and copolymerizing the alpha-monoolefins in the presence of a catalyst comprising a compound of a metal of Group IV—B, V—B or VIII of the Periodic Chart and an organo metal catalyst activator characterised in that said activator comprises 1 to 20 moles of at least one trialkylaluminium compound, each alkyl group of which has 1 to 10 carbon atoms and 99 to 80 moles of at least one dialkylaluminium halide compound, each alkyl group of which has 1 to 10 carbon atoms, and the mole ratio of activator to catalyst in the reaction mixture is in the range of 0.001:1 to 50:1.

The copolymers of the invention are prepared from two or more alpha-monoolefins having 2 to 30 or more carbon atoms. In preferred embodiments of the invention the dialkylaluminium halide is diethylaluminium chloride, the trialkylaluminium compound is triethylaluminium and the preferred alpha-monoolefin monomer reactants are those having 4 to 16 carbon atoms.

Alpha-monoolefins having more than 30 carbon atoms can be used in the preparation of hydrocarbon pipeline friction-reducing agents but they are not usually employed due to their lower reactivities. Generally, highly favorable results have been observed when the friction reducing polymers are prepared from alpha-monoolefins having 4 to 20 carbon atoms. These monomers are preferred for use in the process of the invention since they are most easily polymerised to high molecular weight polymers under liquid state polymerisation conditions. The most preferred monomers are those prepared from butene-1 and at least one other alpha-monoolefin having 5 to 16 carbon atoms. The polymeric compositions of the invention may be prepared from two or from more than two alpha-monoolefins. When two alpha-monoolefin component systems are employed each alpha-monoolefin component is usually present in the reaction mixture in an amount sufficient to produce a copolymer containing at least 10 mole percent of each component. In a preferred embodiment of the two alpha-monoolefin component system each component is present in an amount sufficient to produce copolymers containing 25 or more mole percent of each component. In three or more alpha-monoolefin component systems it is preferred that the maximum content of any one monomer is 90 mole percent and most preferably 75 mole percent, based on the total number of moles of alpha-monoolefin monomer present in the reaction mixture.

Examples of two component polymer systems are propane-dodecane-1 copolymer, butene-1-dodecene-1 copolymer, butene-1-decene-1 copolymer, hexene-1-dodecene-1 copolymer, and octene-1-tetradecene-1 copolymer, etc. Examples of three component systems include butene-1-decene-1-dodecene-1 terpolymer, propene-hexene-1-dodecene-1 terpolymer, etc. Preferred specific copolymeric systems are propene-dodecene-1 copolymer, butene-1-decene-1 copolymer, butene-1-dodecene-1 copolymer, and hexene-1-dodecene-1 copolymer.

The process of the invention can be practised employing batch or continuous techniques using suitably equipped reaction vessels for the polymerization. Stainless steel and glass-lined reactors are preferred to ordinary steel vessels, since they permit easier control of product quality. Suitable reaction vessels are those equipped with agitator or other mixing means capable of maintaining the reaction mixture uniformly distributed, and cooling means sufficient to maintain the reacting polymerization mixture at the desired temperature in the reaction zone.

The polymerization reaction is desirably at least partially carried out in the presence of an inert solvent or diluent for the polymeric product. The early stage of the polymerization may be carried out by mass polymerization, i.e. the monomer charge can serve as the polymerization medium. However, as the polymerization proceeds the viscosity of the reaction mixture increases because of the formation of polymer and it often becomes increasingly more difficult to provide adequate mixing to dissipate the heat built up during the reaction, which is exothermic. It may then become necessary to form a solution or slurry of the reaction mixture by adding an inert solvent or diluent to the reaction mixture to facilitate temperature and product uniformity control. Suitable solvents and diluents include kerosene, naphtha, petroleum distillate, and alkanes having 6 to 10 carbon atoms, such as heptane, and octane.

The polymerization is carried out by the Zielger process using a catalyst comprising one or more reducible or reduced heavy metal compounds and a catalyst activator comprising at least one trialkylaluminium compound and at least one dialkylaluminium halide compound. Reducible heavy metal compounds suitable for use in the invention include the halides, oxyhalides, acetyl acetonates, etc. of the metals of Groups IV—B, V—B, or VIII of the Periodic Chart of the Elements found on pages 392—393 of the Handbook of Chemistry and Physics, 37th Edition. Suitable reducible compounds for use as the catalyst include the tetravalent compounds of titanium and zirconium, and the compounds of vanadium, niobium, cobalt, nickel, etc. Preferred catalysts are the reducible or reduced compounds of titanium, zirconium, vanadium and niobium. Examples of typical reducible catalysts include the halides of titanium and zirconium, such as $TiCl_4$ and $ZrCl_4$, and the oxyhalides of vanadium and niobium, such as $VOCl_3$. Preferred reducible compounds include $TiCl_4$ and $ZrCl_4$. The catalysts can be reduced by, for example, organic compounds of aluminium. Examples of preferred reduced compounds include $TiCl_3$, $TiBr_3$ and $TiCl_3 \cdot 1/3AlCl_3$.

The alkyl groups in the trialkylaluminium compounds used in the invention may be the same or different and each may be straight or branched-chain and contain 1 to 10 carbon atoms. In a preferred embodiment each alkyl group has 2 to 6 carbon atoms and in the most preferred embodiment each alkyl group has 2 to 4 carbon atoms. Examples of typical trialkylaluminium compounds include triethylaluminium, trihexylaluminium, tridecylaluminium, dimethylethylaluminium, diethylpropyl-aluminium, ethylpropylhexylaluminium, butyldecyloctylaluminium, tris(2-methylethyl)aluminium. Preferred trialkylaluminium compounds include triethylaluminium, trimethylaluminium, tripropyl-aluminium and butyldimethylaluminium.

The alkyl groups in the dialkyl aluminium halide compound may be the same or different and each may be straight- or branched-chain and contain 1 to 10 carbon atoms. In a preferred embodiment each alkyl group has 2 to 6 carbon atoms and in the most preferred embodiment each alkyl group has 2 to 4 carbon atoms. The halide may be any of the halides, i.e. bromide, chloride, iodide or fluoride. Bromides, chlorides or iodides are most commonly used and the preferred halide is chloride. Examples of typical dialkylaluminium compounds include diethylaluminium chloride, diethylaluminium bromide, ethylmethylaluminium chloride, butylpropylaluminium iodide, dihexylaluminium chloride, dioctylaluminium bromide, didecylaluminium iodide, bis(3-ethylhexyl)aluminium chloride and diethylaluminium fluoride. Preferred dialkylaluminium halides include diethylaluminium chloride, diethylaluminium bromide, diethylaluminium iodide, dipropylaluminium chloride and ethylpropylaluminium chloride.

The total amount of trialkylaluminium compound and dialkylaluminium halide activator used in the polymerization varies from the minimum amount effective to activate the catalyst up to 50 moles or more per each mole of catalyst used in the polymerization. Amounts as small as 0.001 mole of activator per mole of catalyst are often effective to produce the desired result. Activator in excess of 50 moles per mole of catalyst is usually wasteful and provides no additional advantages. The preferred lower limit of activator is often 0.01 mole and the most preferred lower limit is 0.1 mole per mole of catalyst. The upper activator limit preferably does not exceed 25 moles and most preferable does not exceed 10 moles per mole of catalyst used in the polymerization reaction.

The relative amounts of trialkylaluminium and dialkylaluminium halide in the activator system generally vary from 1 mole of trialkylaluminium per each 99 moles of dialkylaluminium halide to 20 moles of trialkylaluminium per each 80 moles of dialkylaluminium halide. In preferred embodiments of the invention the mole ratio range of trialkylaluminium to dialkylaluminium halide is 3:97 to 15:85.

Other additives such as chain transfer agents can be added to the reaction mixture as desired.

A typical polymerization according to the preferred embodiment is carried out as follows. A suitable equipped reaction vessel is flushed with nitrogen for sufficiently long to purge the reactor of oxygen, and the monomers, solvent (if solvent is initially charged) and activators are charged to the reactor.

The reactor is then blanketed with nitrogen and sealed. The temperature of the reactor contents is adjusted to the desired polymerization temperature, typically in the range of about −20 to 30°C, the catalyst is charged, and the reactor is pressurized to about 3.4 bar gauge (50 psig). As the viscosity builds up an inert solvent such as kerosene or an inert diluent may, if desired, be added to the reaction vessel in a quantity sufficient to maintain the reactor contents in an easily stirrable condition. The polymerization is permitted to continue until the desired conversion of monomer to polymer is achieved. The reaction is terminated by adding an agent to deactivate the catalyst. Suitable deactivating agents include alcohols, such as methyl or isopropyl alcohol. The polymeric product can be recovered from the reaction mixture by precipitation using excess alcohol or it can be used directly as a slurry or solution. Additional details of the product and its method of use can be obtained from GB—A—2074175 mentioned above.

The invention is further illustrated in the following examples, in which parts and percentages are on a weight basis, unless otherwise indicated.

In testing the polymers prepared in the following examples for hydrocarbon fluid friction reducing effectiveness the following procedure was followed. The hydrocarbon test fluid, hexane, was pumped through a test line 0.635 cm (1/4 inch) in diameter and 91.44 cm (3 feet) long at conditions which resulted in a Reynolds number of about 12,600. The amount of polymer added to the hexane in each test was 2 parts per million (ppm). The percentage drag reduction was calculated using the following equation

$$\% \text{ drag reduction} = \frac{Po - Ps}{Po} \times 100$$

wherein Po is the measured pressure drop occurring when hexane without drag reducing agent was pumped through the test line and Ps is the measured pressure drop occurring when the hexane containing drag reducing agent was pumped through the test line.

Example I (Comparative)

A three liter stainless steel reactor equipped with a thermocouple, an agitator and a cooling jacket was purged with nitrogen and charged with 915.7 g of mineral spirits having a boiling range of 184°C to 197°C, 106.2 g of dodecene-1, 14.3 mls of a 25.7 weight percent solution (0.0226 mole) of diethyl aluminium chloride (DEAC) in heptane and 1.5 g of aluminium activated titanium trichloride (TiCl$_3$ · 1/3AlCl$_3$, sold by Stauffer Chemical Company under the designation Type 1.1). The reactor was blanketed with nitrogen, 18.8 g of butene-1 was added to the reactor, and the reactor was pressurized with nitrogen to 3.4 bar gauge) (50 psig). The reaction began upon addition of the catalyst and reactants. The temperature was maintained at 15°C throughout the polymerization. The reactor contents were agitated sufficiently to ensure a uniform temperature throughout the reaction mixture during the polymerization period. The polymerization was terminated by adding sufficient alcoholic potassium hydroxide to completely deactivate the catalyst.

Drag reduction performance data were obtained on the polymer formed. Reaction and drag reduction performance data are tabulated in the Table.

Example II (Comparative)

The procedure of Example I was repeated except that 0.0226 mole of triethylaluminium (TEAL) was substituted for the DEAC solution. Reaction and drag reduction performance data obtained on the resulting polymer are tabulated in the Table.

Example III

The procedure of Example I was repeated except that .0011 mole of TEAL and .0177 mole of DEAC were substituted for the 0.0226 mole of DEAC. Reaction and drag reduction performance data are tabulated in the Table.

TABLE

| Example | Activator | Polymer, % | Batch time, hours | Drag reduction, % |
|---------|-----------|------------|-------------------|-------------------|
| I | DEAC | 7.0 | 12 | 9.7 |
| II | TEAL | 7.1 | 2 | 4.2 |
| III | DEAC & TEAL | 7.6 | 8 | 18.2 |

The above examples illustrate the benefits of the invention. In Example I, in which diethylaluminium chloride was used as the sole catalyst activator the reaction time was 12 hours and the % drag reducttion was 9.7. In Example II, the sole catalyst activator was triethylaluminium. The reaction time was only 2 hours but the polymer produced a drag reduction of only 4.2%. In Example III, which illustrates the invention, a polymer was prepared using a mixture of diethylaluminium chloride and aluminiumtriethyl. The polymerization time was intermediate to the polymerization times for the Example I and II runs; however, the drag reduction observed when the Example III polymer was used was 18.2%, almost double that of the next best drag reducing polymer prepared, the Example I polymer.

Although the invention is described with particular reference to specific examples, it is understood that alternate embodiments are contemplated. For example more than one trialkylaluminium and/or dialkylaluminium chloride catalyst activator can be used in the polymerization reaction or mixtures of catalysts can be employed. Furthermore, the polymers can be used to reduce friction in the pumping of other hydrocarbon fluids, such as crude oil.

**Claims**

1. A hydrocarbon fluid friction reducing composition comprising (a) organic solvent and (b) a high molecular weight copolymer of two or more alpha-monoolefins having 2 to 30 carbon atoms prepared by copolymerizing the corresponding alpha-monoolefins in the presence of a catalyst comprising a compound of a metal of Group IV—B, V—B, or VIII of the Periodic Chart and an organo metal catalyst activator characterised in that said activator comprises 1 to 20 moles of at least one trialkylaluminuim compound, each alkyl group of which has 1 to 10 carbon atoms and 99 to 80 moles of at least one dialkylaluminium halide compound, each alkyl group of which has 1 to 10 carbon atoms, per 100 moles of catalyst activator, and the mole ratio of activator to catalyst in the reaction mixture is in the range of 0.001:1 to 50:1.

2. A process for preparing a hydrocarbon fluid friction reducing composition comprising mixing two or more alpha-monoolefins having 2 to 30 carbon atoms in a diluent or an organic solvent and copolymerising the alpha-monoolefins in the presence of a catalyst comprising a compound of a metal of Group IV—B, V—B or VIII of the Periodic Chart and an organo metal catalyst activator characterised in that said activator comprises 1 to 20 moles of at leat one trialkylaluminium compound, each alkyl group of which has 1 to 10 carbon atoms and 99 to 80 moles of at least one dialkylaluminium halide compound, each alkyl group of which has 1 to 10 carbon atoms, and the mole ratio of activator to catalyst in the reaction mixture is in the range of 0.001:1 to 50:1.

3. A composition as claimed in claim 1 or a process as claimed in claim 2, characterised in that said alpha-monoolefins have 4 to 20 carbon atoms and said organic solvent is selected from kerosene, naphtha, petroleum distillate, alkanes having 6 to 10 carbons and mixtures of these.

4. A composition or process as claimed in any one of claims 1 to 3 characterised in that said copolymer is prepared from butene-1 and at least one other alpha-monoolefin having 5 to 16 carbon atoms.

5. A composition or process as claimed in claim 4, characterised in that said other alpha-monoolefin is selected from hexene-1, octene-1, decene-1, dodecene-1, tetradecene-1 and mixtures of these.

6. A composition or process as claimed in any one of claims 1 to 5, characterised in that said catalyst is selected from titanium halides, zirconium halides, vanadium oxyhalides, niobium oxyhalides and mixtures of these.

7. A composition or process as claimed in any one of claims 1 to 6 characterised in that the ratio of activator to catalyst is in the range of 0.01 to 25 moles of activator per mole of catalyst, and the mole ratio of total trialkylaluminium compound to total dialkylaluminium halide compound is in the range of 3:97 to 15:85, and each alkyl group in the trialkylaluminium compound and each alkyl group in the dialkylaluminium halide compound has 2 to 6 carbon atoms.

8. A composition or process as claimed in any one of claims 1 to 7 characterised in that said catalyst is selected from titanium tetrachloride, titanium trichloride and mixtures of these.

9. A composition or process as claimed in any one of claims 1 to 8 characterised in that said trialkylaluminium compound is triethylaluminium and said dialkylaluminium halide is diethylaluminium chloride.

10. The use of a composition as claimed in claim 1, or in any one of claims 3 to 9 when appendant to claim 1, as a friction-reducing additive for a hydrocarbon fluid.

**Patentanpsrüche**

1. Kohlenwasserstoffflüssigkeits-Zusammensetzung mit reibungsreduzierender Wirkung, enthaltend (a) ein organisches Lösungsmittel und (b) ein Copolymer mit hohem Molekulargewicht aus zwei oder mehreren alpha-Monoolefinen mit 2 bis 30 Kohlenstoffatomen, hergestellt durch Copolymerisation der entsprechenden alpha-Monoolefine in Gegenwart eines Katalysators, enthaltend eine Verbindung eines Metalls der Gruppe IV—B, V—B oder VIII des Periodischen Systems und einen Organometallkatalysator-Aktivator, dadurch gekennzeichnet, daß der Aktivator 1 bis 20 Mol mindestens einer Trialkylaluminiumverbindung, wobei jede Alkylgruppe 1 bis 10 Kohlenstoffatome besitzt und 99 bis 80 Mol mindstens einer Dialkylaluminiumhalogenid-Verbindung, wobei jede Alkylgruppe 1 bis 10 Kohlenstoffatome besitzt, pro 100 Mol des Katalysator-Aktivators enthält und das Mol-Verhältnis von Aktivator zu Katalysator in der Reaktionsmischung im Bereich von 0,001:1 bis 50:1 beträgt.

2. Verfahren zur Herstellung einer Kohlenwasserstoff-Flüssigkeitszusammensetzung mit reibungsreduzierender Wirkung, bei dem man zwei oder mehrere alpha-Monoolefine mit 2 bis 30 Kohlenstoffatomen in einem Verdünnungsmittel oder einem organischen Lösungsmittel vermischt und die alpha-Monoolefine in Gegenwart eines Katalysators copolymerisiert, wobei der Katalysator eine Verbindung eines Metalls der Gruppe IV—B, V—B oder VIII des periodischen Systems und einen Organometallkatalysator-Aktivator enthält, dadurch gekennzeichnet, daß der Aktivator 1 bis 20 Mol mindestens einer Trialkylaluminium-Verbindung, wobei jede Alkylgruppe 1 bis 10 Kohlenstoffatome besitzt und 99 bis 80 Mol mindestens einer Dialkylaluminiumhalogenid-Verbindung, wobei jede Alkylgruppe 1 bis 10 Kohlenstoffatome besitzt, enthält und das Molverhältnis von Aktivator zu Katalysator in der Reaktionsmischung im Bereich von 0,001:1 bis 50:1 beträgt.

3. Zusammensetzung nach Anspruch 1 oder ein Verfahren nach Anspruch 2, dadurch gekennzeichnet, daß die alpha-Monoolefins 4 bis 20 Kohlenstoffatome aufweisen und das organische Lösungsmittel aus Kerosin, Naphtha, Erdöldestillat, Alkanen mit 6 bis 10 Kohlenstoffatomen und Mischungen davon ausgewählt ist.

4. Zusammensetzung oder Verfahren nach einem der Ansprüche 1 bis 3, dadurch gekennzeichnet, daß das Copolymer aus Buten-1 und mindestens einem anderen alpha-Monoolefin mit 5 bis 16 Kohlenstoffatomen hergestellt ist.

5. Zusammensetzung oder Verfahren nach Anspruch 4, dadurch gekennzeichnet, daß das andere alpha-Monoolefin aus Hexen-1, Octen-1, Decen-1, Dodecen-1, Tetradecen-1 und Mischungen davon ausgewählt ist.

6. Zusammensetzung oder Verfahren nach einem der Ansprüche 1 bis 5, dadurch gekennzeichnet, daß der Katalysator aus Titanhalogeniden, Zirkoniumhalogeniden, Vanadiumoxyhalogeniden, Nioboxyhalogeniden und Mischungen davon ausgewählt ist.

7. Zusammensetzung oder Verfahren nach einem der Ansprüche 1 bis 6, dadurch gekennzeichnet, daß das Verhältnis von Aktivator zu Katalysator im Bereich von 0,01 bis 25 Mol Aktivator pro Mol Katalysator und das Molverhältnis der gesamten Trialkylaluminium-Verbindung zur gesammten Dialkylaluminiumhalogenid-Verbindung im Bereich von 3:97 bis 15:85 liegt und jede Alkylgruppe in der Trialkylaluminium-Verbindung und jede Alkylgruppe in der Dialkylaluminiumhalogenid-Verbindung 2 bis 6 Kohlenstoffatome aufweist.

8. Zusammensetzung oder Verfahren nach einem der Ansprüche 1 bis 7, dadurch gekennzeichnet, daß der Katalysator aus Titantetrachlorid, Titantrichlorid und Mischungen davon ausgewählt ist.

9. Zusammensetzung oder Verfahren nach einem der Ansprüche 1 bis 8, dadurch gekennzeichnet, daß die Trialkylaluminium-Verbindung Triethylaluminium und das Dialkylaluminiumhalogenid Diethylaluminiumchlorid ist.

10. Verwendung einer Zusammensetzung nach Anspruch 1 oder einem der Ansprüche 3 bis 9, wenn von Anspruch 1 abhängig, als ein reibungsreduzierendes Additiv für eine Kohlenwasserstofflüssigkeit.

**Revendications**

1. Composition réduisant le frottement d'un fluide hydrocarboné, comprenant a) un solvant organique et b) un copolymère de haut poids moléculaire de 2 ou plusieurs alpha-monooléfines ayant 2 à 30 atome de carbone, préparée par copolymérisation des alpha-monooléfines correspondantes en présence d'un catalyseur comprenant un composé d'un métal du groupe IV—B, V—B ou VIII du Tableau Périodique et d'un activateur organométallique de catalyseur caractérisée en ce que cet activateur comprend 1 à 20 moles d'au moins un composé trialkylaluminium dont chaque groupe alkyle à 1 à 10 atomes de carbone et 99 à 80 moles d'au moins un halogénure de dialkylaluminium, dont chaque groupe alkyle a 1 à 10 atomes de carbone, pour 100 moles d'activateur de catalyseur, et que le rapport molaire de l'activateur au catalyseur dans le mélange réactionnel est dans la gamme de 0,001:1 à 50:1.

2. Procédé pour préparer une composition réduisant le frottement d'un fluide hydrocarboné, comprenant le mélange de 2 ou plusieurs alpha-monooléfines ayant 2 à 30 atomes de carbone dans un diluant ou un solvant organique et la copolymérisation des alpha-monooléfines en présence d'un catalyseur comprenant un composé d'un métal du groupe IV—B, V—B ou VIII du Tableau Périodique et d'un activateur organométallique de catalyseur, caractérisé en ce que cet activateur comprend 1 à 20 moles d'au moins un composé trialkylaluminium, dont chaque groupe alkyle à 1 à 10 atomes de carbone et 99 à 80 moles d'au moins un halogénure de dialkylaluminium dont chaque groupe alkyle a 1 à 10 atomes de carbone, pour 100 moles d'activateur de catalyseur, et que le rapport molaire de l'activateur au catalyseur dans le mélange réactionnel est dans la gamme de 0,001:1 à 50:1.

3. Composition suivant la revendication 1 ou procédé suivant la revendication 2, caractérisé en ce que ces alpha-monooléfines ont 4 à 20 atomes de carbone et que ce solvant organique est choisi parmi le kérosène, le naphte, le distillat de pétrole, des alcanes ayant 6 à 10 atomes de carbone et leurs mélanges.

4. Composition ou procédé suivant l'une quelcoqnue des revendication 1 à 3, caractérisé en ce que ce copolymère est préparé à partir du butène-1 et d'au moins une autre alpha-monooléfine ayant 5 à 16 atomes de carbone.

5. Composition ou procédé suivant la revendication 4, caractérisé en ce que cette autre alpho-monooléfine est choisie parmi l'heexène-1, l'octène-1, le decène-1, le dodecène-1, le tétradecène-1 et leurs mélanges.

6. Composition ou procédé suivant l'une quelconque des revendications 1 à 5, caractérisé en ce que ce catalyseur est choisi parmi des halogénures de titane, des halogénures de zirconium, des oxy-halogénure de vanadium, des oxy-halogénures de niobium et leurs mélanges.

7. Composition ou procédé suivant l'une quelconque des revendications 1 à 6, caractérisé en ce que le rapport l'activateur à catalyseur est dans la gamme de 0,01 à 25 moles par mole de catalyseur, et que le rapport molaire du composé trialkylaluminium total à l'halogénure de dialkylaluminium total est dans la gamme de 3:97 à 15:85, et que chaque groupe alkyle dans le composé trialkylaluminium et chaque groupe dans l'halogénure de dialkylaluminium ont 2 à 6 atomes de carbone.

8. Composition ou procédé suivant l'une quelconque des revendications 1 à 7, caractérisé en ce que ce catalyseur est choisi parmi le tétrachlorure de titane et le trichlorure de titane et leurs mélanges.

9. Composition ou procédé suivant l'une quelconque des revendications 1 à 8, caractérisé en ce que ce composé trialkylaluminium est du triéthylaluminium et que cet halogénure de dialkylaluminium est le chlorure de diéthylaluminium.

10. Utilisation d'une composition suivant la revendication 1 ou suivant l'une quelconque des revendications 3 à 9 en relation avec la revendication 1, en tant qu'additf réduisant le frottement pour un fluide hydrocarboné.